# EUROPEAN PATENT SPECIFICATION

(11) **EP 1 223 770 B1**
(45) Date of publication and mention of the grant of the patent: **19.02.2003**
(21) Application number: 00440334.1
(22) Date of filing: 27.12.2000
(51) Int. Cl.: H04Q 7/36

(54) **Sectorization of a cellular network**
Sektorisierung eines zellularen systems
Sectorisation d'un réseau cellulaire

(43) Date of publication of application: 17.07.2002
(73) Proprietor: ALCATEL, 75008 Paris (FR)
(72) Inventor: Chervatin, Jean-Marie, F-95150 Taverny (FR); Cochet, Florence, F-94300 Vincennes (FR)
(74) Representative: Urlichs, Stefan, Dipl.-Phys.

(56) References cited:
- EP-A- 0 720 405
- EP-A- 0 994 632

## Description

The present invention relates to cellular communication networks.

The topology of a cellular communication network is usually determined by the position of base stations on the area to be covered by the cellular communication network, as well as by the arrangement of communication channels in the cells.

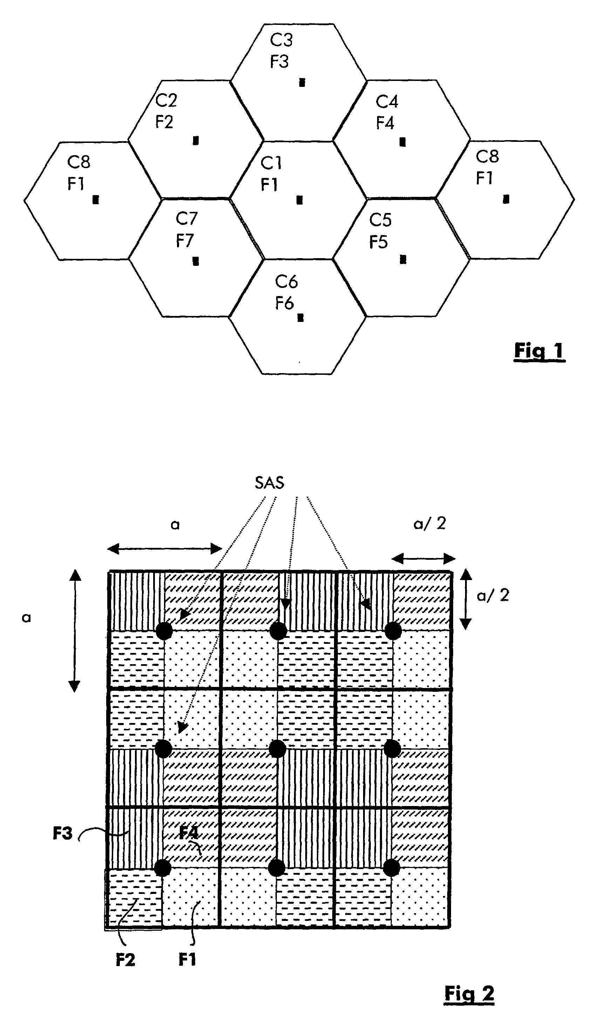

A well known cellular communication network topology consists in the juxtaposition of hexagonal cells on the area to be covered. This juxtaposition of hexagonal cells is called hexagonal cell cluster in the following. As shown on Fig. 1, such an hexagonal cell cluster is obtained by positioning the base stations of the cellular communication network in such a way that each base station is the center of a fictive hexagonal cell C1 surrounded by six other identical hexagonal cells C2, ..., C7 at the center of which six other base stations are located. This cluster can be used to pave any area to be covered by a cellular communication network. The hexagonal cluster is for example used in the GSM radio communication network.

Once the position of the base stations has been defined, the arrangement of the communication channels has to be chosen appropriately. Usually, a communication channel is represented by a frequency out of a set of several possible frequencies. For example, one frequency may be associated to each cell. Each terminal located in a cell communicates with the corresponding base station by using the corresponding frequency. As illustrated on fig 1, the terminals located in cell C1 will use frequency F1, the ones located in cell C2 will use frequency F2 and so on.

Usually, an omni-directional antenna is used at the base station for covering the whole cell. Inside a cell, time division multiple access may be used so that more than one user can communicate with the base station.

This topology avoids that the terminals located in one cell C1 cause uplink interference in its neighboring cells C2, ..., C7 since they use different frequency domains. As well, this topology limits downlink interference since the frequency used by a base station in cell C1 is not used by the terminals of its neighboring cells C2, ..., C7.

However, because the number of possible frequencies is limited, a frequency must be reused in distant cells of the cellular communication network causing uplink and downlink co-channel interference, for example frequency F1 is re-used in cells C1, C8 and C9.

For dense areas, the network topology described above proves to be inappropriate for the following reasons. First, the cells have to be very small causing non-negligible co-channel interference between distant cells using the same frequency. The number of required frequencies is often higher than the frequency band attributed to the cellular communication network.

A known solution to cope with this problem consists in dividing a cell in several sectors, each having its own frequency channel. This arrangement of frequency channel enables it to better manage and reduce the co-channel interference with a low number of different frequencies.

This principle has already been used in fixed wireless communication networks for dense areas (for example Local Multipoint Distribution Services LMDS). The term "fixed" refers to fixed locations for the users. Since the users don't move, no hand-over needs to be implemented in the network. Consequently system capacity that would otherwise have been used to ensure uniform coverage for mobility can be redirected to provide higher throughput for dense areas.

In a cell, the 360° area around the base station is split into several subdivisions, each of which is covered by an appropriate directional antenna. The directional antennas look out from the base station location and cover the different sectors of the cell. They form a sectorized antenna system.

A known cell cluster using sectorized antenna system in a LMDS network is a square cell cluster divided in four square sectors as shown on Fig. 2.

Each cell is a square having a side of dimension a, divided in four squares having a side of dimension a/2. A sectorized antenna system SAS is located at the center of each cell and comprises four directional antennas looking out from the center of the cell with an opening of 90° each covering one of the four square sectors. In the cell cluster shown on fig. 2, four frequency channels F1, F2, F3, F4 are used in the whole network. Each sector of a cell is allocated one of the four frequency channels. The frequency channels used in a neighboring cell are deduced by symmetry from the ones used in the reference cell.

This type of cluster enables a better frequency reuse in the radio communication system. However co-channel interference remain present in the network. Uplink interference are particularly critical in the usual square cell cluster with four sectors. Indeed, the demodulation of a Time Division Multiplex in uplink requires a high signal quality and is as a consequence particularly sensitive to interference.

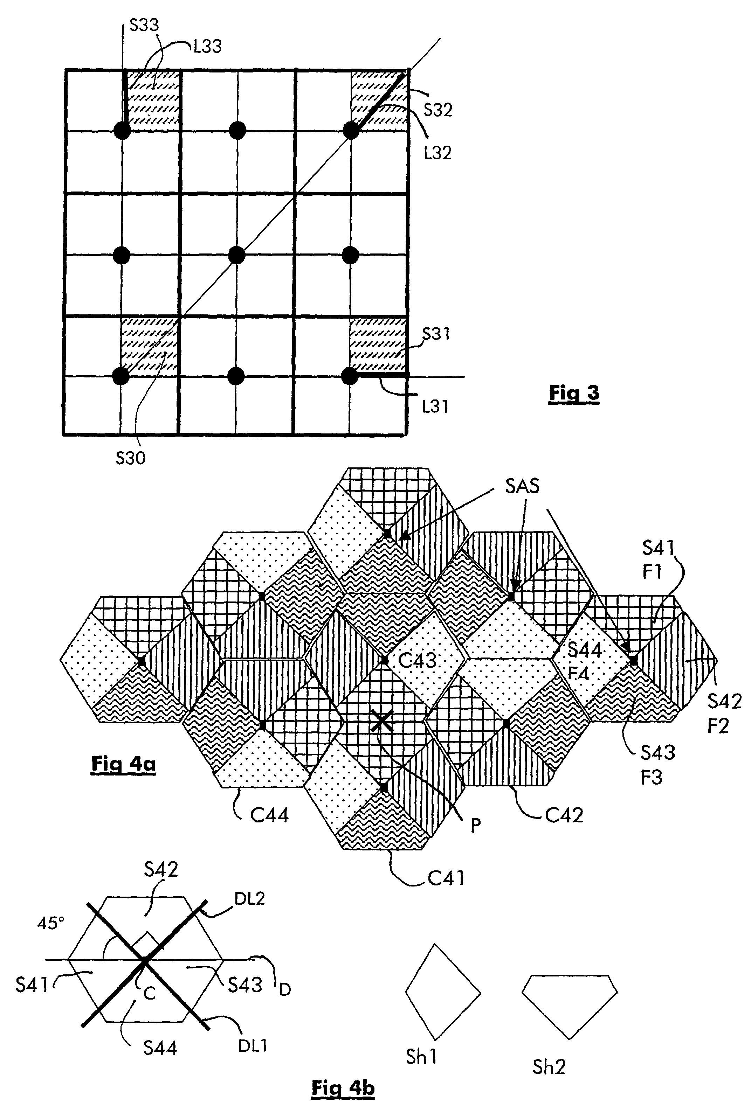

Fig 3 shows the positions of users causing most of the uplink interference in a sectors of the cell. Sector S30 is taken as reference sector. Sectors S31, S32, S33 in distant cells are allocated the same frequency channel F4 as sector S30. The users situated on the bold lines L31, L32 and L33, while communicating with their respective base station, cause directly interference with the users situated in sector S30.

Depending on the modulation type used, a predefined carrier to interference ratio C/I should be attained to ensure a good functioning of the network. The following example illustrates the requirements in term of C/I for a square cell cluster having four square sectors. In this configuration, the uplink interfering users located on bold line L31 and L33 cause a C/I value of 14,8 dB in sector S30, interfering users located on bold line L32 cause a C/I value of 15,3 dB in sector S30. The total interference level experienced in sector S30 equals 14dB, whereas a C/I of 17dB should be reached in order to neglect the effects of the uplink interference. These values are only given for sake of illustration and depend on the modulation type used in the network as well as on the quality of the reception chain.

European patent application EP 0 720 405 discloses a method for reducing interference in a cellular radio communication network with frequency reuse comprising hexagonal cells divided in four sectors. The type of interference addressed in this application is mixed co-channel interference produced by a downlink signal emitted in a neighboring cell on an uplink communication in the considered cell when both downlink signal and uplink signal use the same frequency band. According to this application, the delineation lines of the sector should be chosen depending on the line joining the center of a cell with the center of its closest frequency reuse cell. A rotation of this delineation line is tolerated in a predefined angular range.

European patent application EP 0 994 632 discloses a method of reducing interference in a cellular radio communication network. The type of interference addressed in this application are uplink co-channel interference produced by an uplink signal emitted in a neighboring cell on an uplink signal in the considered cell when both uplink signal use the same frequency channel. A solution disclosed in this application consists in combining an predefined frequency reuse scheme with the use of adapted antennas having a notched pattern scheme.

Such antenna have the inconvenient to be complex and expensive.

The object of the present invention is to provide a cell cluster and a communication channel arrangement in the cell cluster to minimize uplink co-channel interference in a radio communication network and increase the network capacity.

Another object of the invention is to provide a sectorized antenna system to be used in a cell cluster described above.

These objects, and others that appear below, are achieved by a radio communication network according to claim 1, and a use of sectorized antenna system according to claim 5.

The hexagonal cell cluster with four 90° angular sectors according to the present invention has the advantage to minimize the number of base stations necessary to cover a predefined area.

Another advantage is that it reduces the interference particularly in case of variation of the real cluster with regard to the ideal one because of the ground configuration.

In a preferred embodiment of the invention, antenna with 3dB angle lower than 45° are used in the hexagonal cluster with four 90° angular sectors.

In a preferred embodiment of the invention, two different types of sectorized antennas can be used depending on the shape of the sector to be covered.

Further advantageous features of the invention are defined in the dependent claims.

Other characteristics and advantages of the invention will appear on reading the following description of a preferred implementation given by way of non-limiting illustrations, and from the accompanying drawings, in which:
- Figure 1 shows a usual hexagonal cell cluster with one frequency per cell as in a GSM network (prior art);
- Figure 2 shows a square cell cluster with four square sectors as known in a usual fixed wireless LMDS network (prior art);
- Figure 3 shows the position of the most important interfering users causing uplink interference in a fixed wireless network as shown on figure 2 (prior art);
- Figure 4 shows a radio communication network (Fig 4a) with hexagonal cell cluster with four 90° sectors (Fig 4b) according to a preferred embodiment of the present invention;
- Figure 5 shows the position of the most important interfering users causing uplink interference in a fixed wireless network as shown on figure 4a.

Figures 1, 2 and 3 have already been described in relation with prior art.

Figure 4a represents a part of a radio communication network according to the present invention comprising juxtaposed hexagonal cells each divided in four 90° sectors. A sectorized antenna system SAS is located at the center of each hexagon and comprises four sectorized antennas looking out from the center of the hexagon. The sectorized antenna system is preferably co-located with the base station controlling the communication inside the cell.

Figure 4b represents one of the cells of the radio communication network shown on Figure 4a. The four 90° sectors in the hexagonal cell S41, ..., S44 are delimited by two sector delineation lines DL1, DL2 crossing at the center C of the hexagon. The first delineation line DL1 is obtained by rotating a diagonal D of the hexagon by 45° around the center C of the hexagon, the other delineation line DL2 of the sectors is perpendicular to the first delineation line DL1.

The main direction of a sectorized antenna dedicated to cover a sector should be the same as the bisecting line that divides the sector in two identical parts. As a consequence, the main direction of two sectorized antennas covering the sectors S41 and S43 are along the diagonal D of the hexagon and the main direction for the sectorized antennas covering the sectors S42 and S44 is the perpendicular to the diagonal D of the hexagon.

Two sectors S41 and S43 have a first shape Sh1 and the two other sectors S42 and S44 have a second shape Sh2.

The communication channel associated to each sector can be characterized by the channel frequency used, by the modulation type used and by other criterions as known by those skilled in the art. For sake of simplicity, the communication channels will be characterized by the frequency used.

Four possible frequencies F1, ..., F4 are assigned to the different sectors of the hexagonal cells as shown on figure 4a. The four different patterns filling the different sectors represent the four different frequencies used.

The frequencies are reused in neighboring cell as shown on figure 4a so that, in a group of four cells C41, C42, C43, C44, the four sectors looking out to a point P at the center of this group use the same frequency, F1 in this example.

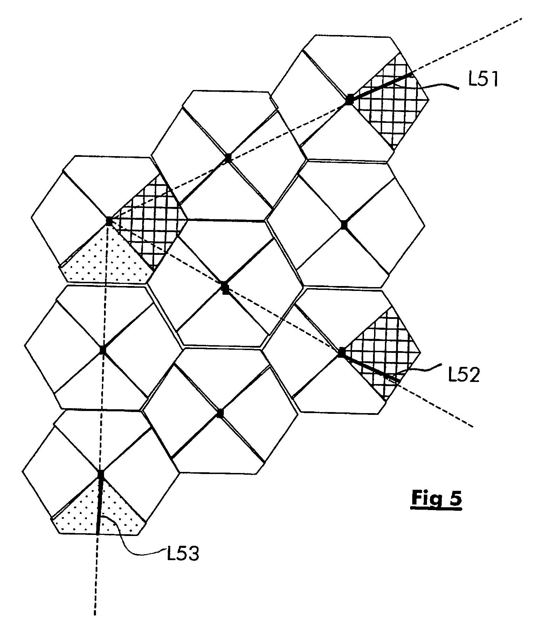

Figure 5 shows the position of the most important interfering users causing uplink interference in a sector. For a sector having the shape Sh1, there are two groups of essential interferers located on the bold lines L51, L52. For a sector having the shape Sh2, there is only one group of essential interferers located on bold line L53.

In a cell cluster according to the present invention, the number of essential interferers is smaller or equal to two per sector while equal to three per sectors in the case of the square cell cluster described in the prior art section.

It should be acknowledge by those skilled in the art that the angle of 45° between the diagonal D and the first delineation line could be chosen differently in a small domain around 45°, the most important thing is to keep the number of groups of essential interferers smaller or equal to two.

The C/I value for the hexagonal cell cluster with four sectors according to the invention is equal to 15,3dB. Consequently, the uplink interference caused by users located in distant sectors using the same communication channel is lower than in the square cell cluster. A gain of more than 1dB is attained compared to the usual square pattern.

The antenna diagram of the different sectorized antennas is chosen to cover the whole sector. This is guaranteed with setorized antennas having an opening of 90° or more precisely a 3dB angle of 45°, the 3dB angle being measured between the main direction of the sectorized antenna and the direction where the power of the antenna is decreased by 3dB.

In a preferred embodiment of the present invention, since, two different shapes of sectors Sh1, Sh2 are obtained, two different types of antennas may be used in order that the antenna diagram matches as good as possible the shape of the sector. For this purpose the main lobe of the antenna diagram should be as close as possible to the shape of the sector.

In a preferred embodiment of the present invention, at least one of the sectorized antennas have a 3dB angle lower than 45°. Class II antennas with an opening of 60° can ensure enough coverage for the 90° sector without coverage holes.

Indeed, in the type of sectors S41 and S43, the most power should be provided on the bisecting line of the sector since the longest distance between the sectorized antenna and the edge of the sector is situated on the bisecting line of the sector.

For the type of sectors S42, S44 the most power have to be provided in both direction making and angle of around 30° with the bisecting line of the sector.

The use of antennas with an opening of 60° is especially recommended for sector S41 and S43 since the protection on the side lobes need not to be so high.

As a consequence, the coverage does not extend over the sector contrary to the square cell cluster where the most of the power has to be provided at the edge of the sector implying automatically that the coverage extend beyond the sector to be covered.

This has the advantage that the same frequency channel could be reused in the neighboring sector. As a consequence in another embodiment of the present invention, several layers of frequency channel are superposed in the same cell. Preferably, the frequency assignement represented on Fig 4a constitutes a first frequency layer, a second frequency layer could be obtained in that:
- all sectors being allocated the frequency F1 in the first layer are allocated the frequency F2 in the second layer,
- all sectors being allocated the frequency F2 in the first layer are allocated the frequency F1 in the second layer,
- all sectors being allocated the frequency F3 in the first layer are allocated the frequency F4 in the second layer
- all sectors being allocated the frequency F4 in the first layer are allocated the frequency F3in the second layer.

The cell cluster according to the present invention is especially appropriate for fixed wireless communication network as for example LMDS. However, it can also be used in mobile radio communication network implementing usual hand-over procedures while a mobile user is moving over a sector delineation line or is changing cell.

## Claims

1. Radio communication network comprising base stations, each of said base stations (SAS) providing a radio coverage of an area, herein called cell (C41, ..., C44), divided in four 90° angular sectors (S41, ..., S44); each base station (SAS) being essentially located in the center of the corresponding cell (C41, ..., C44) and comprising sectorized antennas (SAS) each being adapted to provide radio coverage for one of said sectors(S41, ..., S44); said radio communication network supporting a communication channel arrangement (F1, ..., F4) in which, four different communication channels (F1, ..., F4) are associated to said four sectors (S41, ..., S44) of one cell, said four different communication channels (F1, ..., F4) being used in the whole radio communication network according to a communication channel reuse scheme, each group of four sectors belonging to four different cells and looking out to one point located at the center of said four different cells using the same communication channel, said radio communication system being
**characterized in that**
said cells (C41, ..., C44) are of essentially hexagonal shape, a first of two delineation lines (DL1) of said 90° sectors (S41, ..., S44) in each of said cells (C41, ..., C44) being obtained by rotating a diagonal (D) of said hexagon by 45° around said base station (C, SAS), the other delineation line (DL2) of said sectors (S41, ..., S44) being perpendicular to said first delineation line (DL1).

2. Radio communication network according to claim 1, **characterized in that** at least two different types of sectorized antennas are used depending on the shape of the sector (Sh1, Sh2) to be covered.

3. Radio communication network according to claim 1, **characterized in that** at least one of said four sectorized antennas (SAS) has a 3dB angle lower than 45°.

4. Radio communication network according to claim 1, **characterized in that** a second layer of communication channels is superposed to a first layer of communication channels in each hexagonal cells, each one of said two layers of communication channels being chosen according to claim 1.

5. Use of sectorized antenna systems (SAS) coupled with base stations in a cellular radio communication network with cells (C41, ..., C44) subdivided in four 90° sectors (S41, ..., S44), each sectorized antenna system (SAS) comprising four sectorized antennas looking out from the same location, dedicated to provide radio coverage of one of said cells, each sectorized antenna providing radio coverage for one of said sectors using a communication channel arrangement (F1, ..., F4) in which, four different communication channels (F1, ..., F4) are associated to said four sectors (S41, ..., S44) of one cell, said four different communication channels (F1, ..., F4) being used in the whole radio communication network according to a communication channel reuse scheme, each group of four sectors belonging to four different cells and looking out to one point located at the center of said four different cells using the same communication channel, wherein said cells (C41, ..., C44) are of essentially hexagonal shape, a first of two delineation lines (DL1) of said 90° sectors being obtained by rotating a diagonal of said hexagon by 45° around said base station, the other delineation line (DL2) of said sectors being perpendicular to said first delineation line (DL1).

6. Use of sectorized antenna systems according to claim 5 in a fixed wireless radio communication network.

## Revendications

1. Réseau de radiocommunication comprenant des stations de base, chacune desdites stations de base (SAS) prévoyant une couverture radio d'une zone, ci-après appelée cellule (C41, ..., C44), divisée en quatre secteurs angulaires de 90° (S41, ..., S44) ; chaque station de base (SAS) étant essentiellement située au centre de la cellule correspondante (C41, ..., C44) et comprenant des antennes sectorisées (SAS), chacune étant adaptée pour fournir la couverture radio pour l'un desdits secteurs (S41, ..., S44) ; ledit réseau de radiocommunication supportant un agencement de canal de communication (F1, ..., F4) dans lequel, quatre différents canaux de communication (F1, ..., F4) sont associés auxdits quatre secteurs (S41, ..., S44) d'une cellule, lesdits quatre différents canaux de communication (F1, ..., F4) étant utilisés dans l'ensemble du réseau de radiocommunication selon un projet de réutilisation du canal de communication, chaque groupe des quatre secteurs appartenant aux quatre cellules différentes et cherchant un point situé au centre desdites quatre cellules différentes utilisant le même canal de communication, ledit système de radiocommunication étant
**caractérisé en ce que**
lesdites cellules (C41, ..., C44) sont de forme essentiellement hexagonale, une première des deux lignes de délinéation (DL1) desdits secteurs de 90° (S41, ..., S44) dans chacune desdites cellules (C41, ..., C44) étant obtenues en faisant tourner une diagonale (D) dudit hexagone de 45° autour de ladite station de base (C, SAS), l'autre ligne de délinéation (DL2) desdits secteurs (S41, ..., S44) étant perpendiculaire à ladite première ligne de délinéation (DL1).

2. Réseau de radiocommunication selon la revendication 1, **caractérisé en ce qu'**au moins deux types différents d'antennes sectorisées sont utilisés en fonction de la forme du secteur (Sh1, Sh2) à couvrir.

3. Réseau de radiocommunication selon la revendication 1, **caractérisé en ce qu'**au moins l'une desdites quatre antennes sectorisées (SAS) a un angle de 3 dB inférieur à 45°.

4. Réseau de radiocommunication selon la revendication 1, **caractérisé en ce qu'**une deuxième couche de canaux de communication est superposée sur une première couche de canaux de communication dans chaque cellule hexagonale, chacune des deux couches de canaux de communication étant sélectionnée selon la revendication 1.

5. Utilisation de systèmes d'antennes sectorisées (SAS) couplés avec des stations de base dans un réseau de radiocommunication cellulaire avec des cellules (C41, ..., C44) subdivisées en quatre secteurs de 90° (S41, ..., S44), chaque système d'antennes sectorisées (SAS) comprenant quatre antennes sectorisées cherchant depuis le même emplacement, dédié à fournir la couverture radio de l'une desdites cellules, chaque antenne sectorisée prévoyant la couverture radio pour l'un desdits secteurs utilisant un agencement de canal de communication (F1, ..., F4), dans lequel quatre canaux différents de communication (F1, ..., F4) sont associés auxdits quatre secteurs (S41, ..., S44) d'une cellule, lesdits quatre canaux différents de communication (F1, ..., F4) étant utilisés dans l'ensemble du réseau de radiocommunication selon un projet de réutilisation de canal de communication, chaque groupe des quatre secteurs appartenant aux quatre cellules différentes et cherchant un point situé au centre desdites quatre cellules différentes utilisant le même canal de communication, dans lequel lesdites cellules (C41, ..., C44) sont essentiellement de forme hexagonale, une première des deux lignes de délinéation (DL1) desdits secteurs de 90° étant obtenue en faisant tourner une diagonale dudit hexagone de 45° autour de ladite station de base, l'autre ligne de délinéation (DL2) desdits secteurs étant perpendiculaire à ladite première ligne de délinéation (DL1).

6. Utilisation de systèmes d'antennes sectorisées selon la revendication 5 dans un réseau fixe de radiocommunication sans fil.

## Patentansprüche

1. Ein Funkkommunikationsnetz, das Basisstationen umfasst, wobei jede Basisstation (SAS) die Funkabdeckung eines Gebietes bereitstellt, hier Zelle (C41, ..., C44) genannt, die in vier 90°-Sektoren (S41, ..., S44) aufgeteilt ist, und wobei jede Basisstation (SAS) sich im wesentlichen in der Mitte der entsprechenden Zelle (C41, ..., C44) befindet und sektorisierte Antennen (SAS) umfasst, von denen jede so angepasst ist, dass sie die Funkabdeckung eines der Sektoren (S41, ..., S44) bietet, und das Funkkommunikationsnetz eine Anordnung (F1, ..., F4) von Kommunikationskanälen unterstützt, in der vier verschiedene Kommunikationskanäle (F1, ..., F4) den vier Sektoren (S41, ..., S44) einer Zelle zugeordnet sind und wobei die vier unterschiedlichen Kommunikationskanäle (F1, ..., F4) im gesamten Funkkommunikationsnetz entsprechend einem Schema zur Wiederverwendung von Kommunikationskanälen verwendet werden, wobei jede Gruppe von vier Sektoren zu vier verschiedenen Zellen gehört und zu einem Punkt zeigt, der sich in der Mitte der vier unterschiedlichen Zellen befindet, die den selben Kommunikationskanal benutzen, wobei das Funkkommunikationssystem **dadurch gekennzeichnet ist, dass**
die Zellen (C41, ..., C44) im wesentlichen von sechseckiger Gestalt sind, eine erste von zwei Begrenzungslinien (DL1) der 90°-Sektoren (S41, ..., S44) in jeder der Zellen (C41, ..., C44) dadurch erhalten wird, dass eine Diagonale (D) des Sechsecks um 45° um die Basisstation (C, SAS) gedreht wird, und eine andere Begrenzungslinie (DL2) der Sektoren (S41, ..., S44) rechtwinklig zur ersten Begrenzungslinie (DL1) steht.

2. Funkkommunikationsnetzwerk gemäß Anspruch 1, **dadurch gekennzeichnet, dass** abhängig von der Gestalt des abzudeckenden Sektors (Sh1, Sh2) mindestens zwei Typen von sektorisierten Antennen verwendet werden.

3. Funkkommunikationsnetzwerk gemäß Anspruch 1, **dadurch gekennzeichnet, dass** mindestens eine der vier sektorisierten Antennen (SAS) einen 3dB-Winkel von weniger als 45° hat.

4. Funkkommunikationsnetzwerk gemäß Anspruch 1, **dadurch gekennzeichnet, dass** eine zweite Ebene von Kommunikationskanälen einer ersten Ebene von Kommunikationskanälen in jeder sechseckigen Zelle überlagert ist, wobei jede der beiden Ebenen von Kommunikationskanälen gemäß Anspruch 1 ausgewählt wird.

5. Einsatz von mit Basisstationen gekoppelten sektorisierten Antennensystemen (SAS) in einem zellularen Funkkommunikationsnetzwerk mit Zellen (C41, ..., C44), die in vier 90°-Sektoren (S41, ..., S44) unterteilt sind, wobei jedes sektorisierte Antennensystem (SAS) aus vier sektorisierten Antennen besteht, die vom selben Ort abstrahlen und die der Funkabdeckung einer der Zellen dienen, wobei jede sektorisierte Antenne die Funkabdeckung für einen der Sektoren bereitstellt, in dem eine Anordnung von Kommunikationskanälen (F1, ..., F4) verwendet wird, und in dem vier verschiedene Kommunikationskanäle (F1, ..., F4) den vier Sektoren (S41, ..., S44) einer Zelle zugeordnet sind, wobei die vier verschiedenen Kommunikationskanäle (F1, ..., F4) im gesamten Funkkommunikationsnetzwerk entsprechend einem Schema zur Wiederverwendung von Kommunikationskanälen verwendet werden, wobei jede Gruppe von vier Sektoren zu vier verschiedenen Zellen gehört und zu einem Punkt zeigt, der sich in der Mitte der vier unterschiedlichen Zellen befindet, die den selben Kommunikationskanal benutzen, wobei die Zellen (C41, ..., C44) im wesentlichen von sechseckiger Gestalt sind und eine erste von zwei Begrenzungslinien (DL1) der 90°-Sektoren dadurch erhalten wird, dass eine Diagonale des Sechsecks um 45° um die Basisstation gedreht wird, und die andere Begrenzungslinie (DL2) der Sektoren rechtwinklig zur ersten Begrenzungslinie (DL1) steht.

6. Einsatz von sektorisierten Antennensystemen gemäß Anspruch 5 in einem festen drahtlosen Funkkommunikationsnetzwerk.
